# EUROPEAN PATENT APPLICATION

(11) **EP 2 384 042 A1**
(43) Date of publication of application: **02.11.2011**
(21) Application number: 10729244.3
(22) Date of filing: 08.01.2010
(51) Int. Cl.: H04W 16/10, H04W 16/16, H04W 72/08

(54) **MOBILE COMMUNICATION METHOD AND WIRELESS BASE STATION**

(30) Priority: 08.01.2009 JP 2009002926
(71) Applicant: NTT DOCOMO, INC., Chiyoda-ku Tokyo 100-6150 (JP)
(72) Inventor: IWAMURA, Mikio, Tokyo 100-6150 (JP); COSOVIC, Ivan, Tokyo 100-6150 (JP)
(74) Representative: HOFFMANN EITLE
(86) International application number: PCT/JP2010/050147
(87) International publication number: WO 2010/079824

(57) **Abstract**

A mobile communication method according to the present invention includes a step of: (A) transmitting, from a macro radio base station (MBS) to a femto radio base station (FBS,), scheduling information notifying a radio resource assigned for transmitting a predetermined signal in a first cell under the control of the macro radio base station (MBS), a radio resource that can be used in a second cell under the control of the femto radio base station (FBS), or a radio resource that cannot be used in the second cell under the control of the femto radio base station (FBS).

## Description

### TECHNICAL FIELD

The present invention relates to a mobile communication method and a radio base station.

### BACKGROUND ART

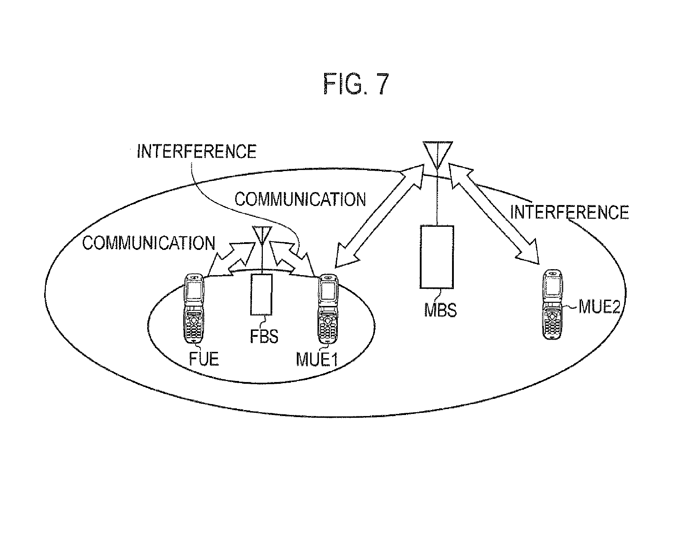

As illustrated in Fig. 7, it is considered to introduce an operation of a mobile communication system in which a macro radio base station MBS (Macro Base Station, also referred to as "eNodeB" or "eNB") and a femto radio base station FBS (Femto Base Station, also referred to as "HeNB" or "HNB") are mixed.

In this case, a mobile station that communicates with the macro radio base station MBS is referred to as "macro mobile station MUE (Macro User Equipment) " and a mobile station that communicates with the femto radio base station FBS is referred to as "femto mobile station FUE (Femto User Equipment)".

Further, a cell under the control of the femto radio base station FBS may also be referred to as "CSG (Closed Subscriber Group) cell". In the CSG cell, connection is permitted only to a specific mobile station belonging to the CSG. An example therefor is that the CSG is set to each family and only the family is permitted to connect to the CSG cell installed at their home. In the CSG cell, the mobile station to which the connection is permitted is limited to the CSG member. Given this fact, it is easily imaged a case where a mobile station with no access right to the CSG cell is present in the vicinity of the CSG cell and a communication is performed by connecting to another cell, e.g., a cell under the control of the macro radio base station MBS.

Thus, in an environment where the femto radio base station FBS and the macro radio base station MBS are mixed, there is a case where the macro mobile station MUE exists within the coverage of the femto radio base station FBS.

### SUMMARY OF THE INVENTION

### PROBLEMS TO BE SOLVED BY THE INVENTION

However, the above-described mobile communication system has a problem in that when the macro radio base station MBS and the femto radio base station FBS are operated in the same frequency band, it is probable that a significant quality deterioration or a capacity decrease occur.

Particularly, when the macro mobile station MUE is present in the vicinity of the femto radio base station FBS, interference between the macro mobile station MUE and the femto radio base station FBS is a problem.

Particularly, when the macro mobile station MUE does not have the access right to the CSG cell under the control of the femto radio base station FBS and performs a notification in the immediate vicinity of the femto radio base station FBS, an interference between the macro mobile station MUE and the femto radio base station FBS is a serious problem.

In the example of Fig. 7, even in the case of the macro mobile stations MUE1 and MUE2 connecting to the same macro radio base station MBS, the interference between the macro mobile station MUE2 and the femto radio base station FBS is not a serious problem because the distance between the two is large; however, the interference between the macro mobile station MUE1 and the femto radio base station FBS is a serious problem because the distance between the two is small.

For example, when the macro mobile station MUE1 transmits an uplink signal, if the femto mobile station FUE transmits an uplink signal at the same time by using the same radio resource, then the femto radio base station FBS experiences the interference from the macro mobile station MUE1 and thus it is probable that the uplink signal from the femto mobile station FUE cannot be correctly received.

Similarly, when the macro mobile station MUE1 receives a downlink signal from the macro radio base station MBS, if the femto radio base station FBS transmits the downlink signal to the femto mobile station FUE at the same time by using the same radio resource, then it is probable that the macro mobile station MUE1 cannot correctly receive the downlink signal from the macro radio base station MBS.

Therefore, the present invention is intended to overcome the above-described problem. An object of the present invention is to provide a mobile communication method and a radio base station, capable of inhibiting an influence of an interference in a mobile communication system where a macro radio base station MBS (first radio base station) and a femto radio base station FBS (second radio base station) are mixed.

### MEANS FOR SOLVING THE PROBLEM

A first aspect of the present invention is summarized as a mobile communication method, including a step of: (A) transmitting, from a first radio base station to a second radio base station, scheduling information notifying a radio resource assigned for transmitting a predetermined signal in a first cell under the control of the first radio base station, a radio resource that can be used in a second cell under the control of the second radio base station, or a radio resource that cannot be used in the second cell under the control of the second radio base station.

A second aspect of the present invention is summarized as a radio base station connected to a second radio base station, including: a scheduling information transmission unit configured to transmit, to the second radio base station, scheduling information notifying a radio resource used for transmitting a predetermined signal assigned in a first cell under the control of the radio base station, a radio resource that can be used in a second cell under the control of the second radio base station, or a radio resource that cannot be used in the second cell under the control of the second radio base station.

A third aspect of the present invention is summarized as a radio base station connected to a first radio base station, including: a notification start request transmission unit configured to transmit a notification start request to the first radio base station; a scheduling information reception unit configured to receive scheduling information, when the first radio base station transmits the scheduling information notifying a radio resource used for transmitting a predetermined signal assigned in a first cell under the control of the first radio base station in response to the notification start request, a radio resource that can be used in a second cell under the control of the second radio base station, or a radio resource that cannot be used in the second cell under the control of the second radio base station; and a scheduling processing unit configured to assign the radio resource used for transmitting a predetermined signal in the second cell under the control of the radio base station, based on the received scheduling information.

### EFFECT OF THE INVENTION

As described above, according to the present invention, it is possible to provide a mobile communication method and a radio base station, capable of inhibiting an influence of an interference in a mobile communication system where a macro radio base station MBS (first radio base station) and a femto radio base station FBS (second radio base station) are mixed.

### BRIEF DESCRIPTION OF THE DRAWINGS

[Fig. 1] Fig. 1 is a diagram showing the entire configuration of a mobile communication system according to a first embodiment of the present invention.
[Fig. 2] Fig. 2 is a functional block diagram of a macro radio base station according to the first embodiment of the present invention.
[Fig. 3] Fig. 3 is a table illustrating one example of a notification state managed by a state management unit of the macro radio base station according to the first embodiment of the present invention.
[Fig. 4] Fig. 4 is a diagram illustrating one example of a format of scheduling information transmitted by a scheduling information transmission unit of the macro radio base station according to the first embodiment of the present invention.
[Fig. 5] Fig. 5 is a functional block diagram of a femto radio base station according to the first embodiment of the present invention.
[Fig. 6] Fig. 6 is a sequence chart showing an operation of the mobile communication system according to the first embodiment of the present invention.
[Fig. 7] Fig. 7 is a diagram explaining problems inherent in a conventional mobile communication system.

### BEST MODES FOR CARRYING OUT THE INVENTION

### (Configuration of mobile communication system according to first embodiment of the present invention)

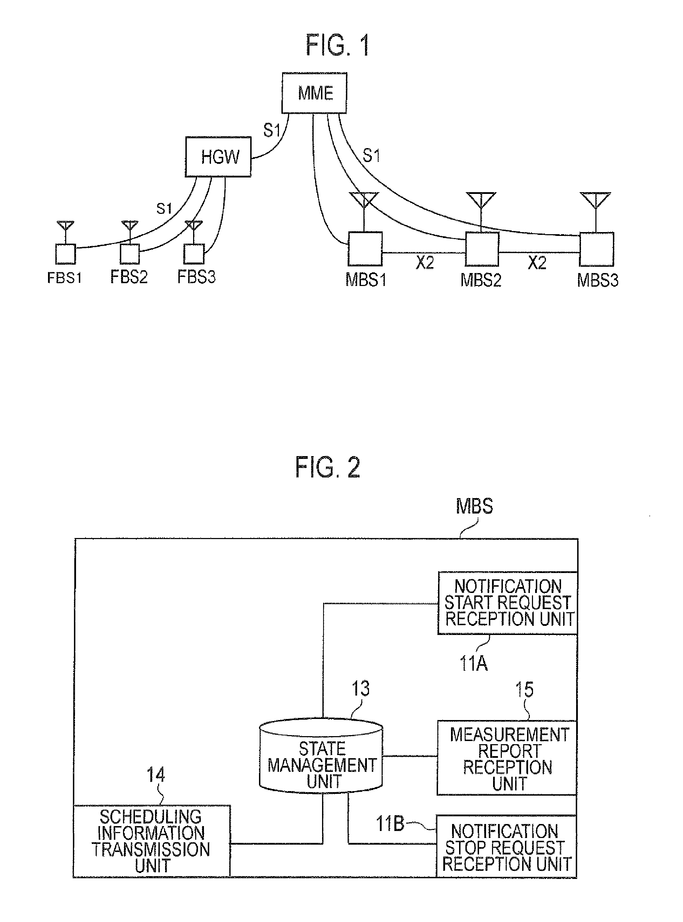

With reference to Fig. 1 to Fig. 5, the configuration of a mobile communication system according to a first embodiment of the present invention will be explained.

As illustrated in Fig. 1, the mobile communication system according to this embodiment includes: macro radio base stations MBS1 to MBS3; femto radio base stations FBS1 to FBS3; a gateway apparatus HGW (Home eNB Gateway) that collectively controls the femto radio base stations FBS1 to FBS3; and a switching center MME (Mobility Management Equipment) that collectively controls the macro radio base stations MBS1 to MBS3 and is connected to the gateway apparatus HGW.

The femto radio base stations FBS1 to FBS3 and the gateway apparatus HGW are connected by an S1 interface, the gateway apparatus HGW and the switching center MME are connected by an S1 interface, the macro radio base stations MBS1 to MBS3 and the switching center MME are connected by an S1 interface, and the macro radio base stations MBS1 to MBS3 are connected with each other by an X2 interface.

In this case, the macro radio base stations MBS1 to MBS3 may be connected with each other by an X2 interface. Further, the femto radio base stations FBS1 to FBS3 and the switching center MME may be connected by the S1 interface without the gateway apparatus HGW therebetween.

Hereinafter, with reference to Fig. 2, the configuration of the macro radio base stations MBS1 to MBS3 will be explained. In this case, the macro radio base stations MBS1 to MBS3 are basically the same in configuration, and are explained collectively as a macro radio base station MBS.

As illustrated in Fig. 2, the macro radio base station MBS includes a notification start request reception unit 11A, a notification stop request reception unit 11B, a measurement report reception unit 12, a state management unit 13, and a scheduling information transmission unit 14.

The notification start request reception unit 11A is configured to receive a notification start request transmitted by the femto radio base station FBS and the gateway apparatus HGW, when at least one communication connection is established in a femto cell.

The notification stop request reception unit 11B is configured to receive a notification stop request transmitted by the femto radio base station FBS or the gateway apparatus HGW, when all the communication connections are released in the femto cell.

The state management unit 13 is configured to manage whether a state of each femto radio base station is in a notification state or non-notification state.

Specifically, the state management unit 13 is configured to manage the state of the femto radio base station FBS that manages a femto cell as a notification state, when detecting the presence of the mobile station UE that is in communication in the femto cell and receiving a measurement report (MR) indicating that a downlink radio quality in the femto cell is equal to or more than a predetermined threshold value from the mobile station UE that is in communication in the macro cell.

Further, the state management unit 13 may be configured to manage the state of the femto radio base station FBS that manages a femto cell as a notification state, when detecting the presence of the mobile station UE that is in communication in the femto cell.

Alternately, the state management unit 13 may be configured to manage the state of the femto radio base station FBS that manages a femto cell as a notification state, when receiving the measurement report indicating that the downlink radio quality in the femto cell is equal to or more than a predetermined threshold value from the mobile station UE that is in communication in a macro cell.

In this case, the state management unit 13 may be configured to detect the presence of the mobile station UE that is in communication in such a femto cell, in response to the notification start request transmitted by the femto radio base station FBS or the gateway apparatus HGW, when at least one communication connection is established in a femto cell that is under the control of the femto radio base station FBS.

Further, the state management unit 13 may be configured to manage the state of the femto radio base station that manages a femto cell as a non-notification state, in response to a notification stop request transmitted by the femto radio base station FBS or the gateway apparatus HGW, when all the communication connections are released in the femto cell under the control of the femto radio base station FBS.

Moreover, in such a measurement report, an ID of the femto radio base station FBS is included. Examples of the ID of the femto radio base station FBS may include "PCI (Physical Cell Identity)", "CID (Cell Identity)", and "CGI (Cell Global Identity)".

It is noted that macro radio base station MBS may instruct the macro mobile station MUE to transmit the measurement report, when "RSRP (Reference Signal Received Power)", "RSRQ (Reference Signal Received Quality)", etc., of the surrounding cells reach a predetermined threshold value or higher.

Further, in order to detect that the macro mobile station MUE is farther away from the femto radio base station FBS, the macro radio base station MBS may instruct the macro mobile station MUE to transmit the measurement report, when "RSRP", "RSRQ", etc., of the surrounding cells reach a predetermined threshold value or lower.

Alternately, the macro radio base station MBS may instruct the macro mobile station MUE to periodically transmit the measurement report including "RSRP", "RSRQ", etc., of the surrounding cells.

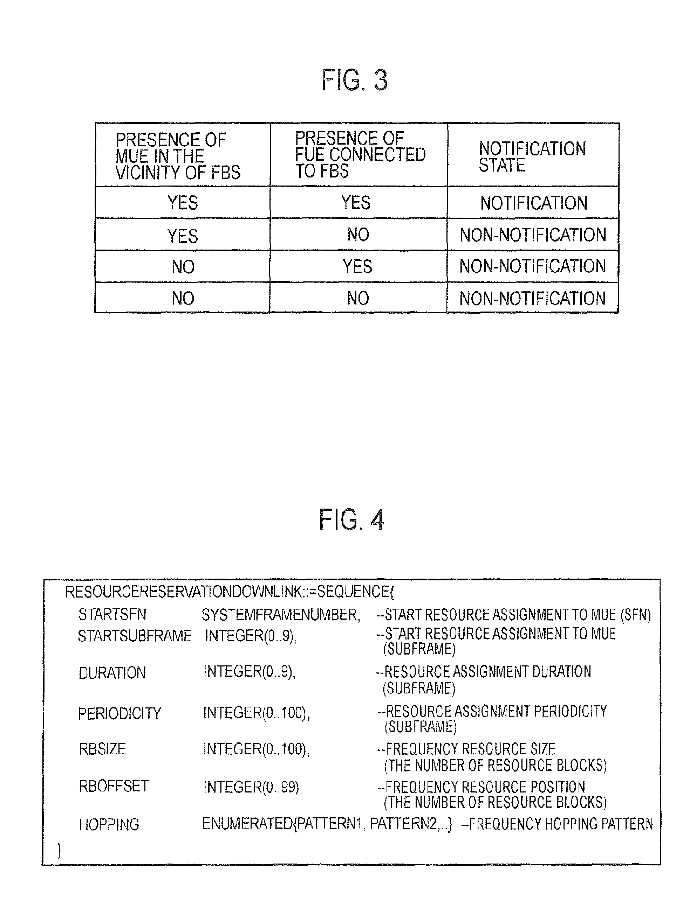

For example, as illustrated in Fig. 3, when there is a femto mobile station FUE that is being connected to a femto cell under the control of the femto radio base station FBS (when "whether FUE connected to FBS is present or not" = "Yes") and when there is a macro mobile station MUE in the vicinity of the femto radio base station FBS (when "whether MUE in the vicinity of FBS is present or not" = "Yes"), the state management unit 13 is configured to manage the state of the femto radio base station FBS as a "notification state".

Further, when there is a femto mobile station FUE that is being connected to the femto cell under the control of the femto radio base station FBS (when "whether FUE connected to FBS is present or not" = "Yes") and when there is not a macro mobile station MUE in the vicinity of the femto radio base station FBS (when "whether MUE in the vicinity of FBS is present or not" = "No"), the state management unit 13 is configured to manage the state of the femto radio base station FBS as a "non-notification state".

Moreover, when there is not a femto mobile station FUE that is being connected to the femto cell under the control of the femto radio base station FBS (when "whether FUE connected to FBS is present or not" = "No") and when there is a macro mobile station MUE in the vicinity of the femto radio base station FBS (when "whether MUE in the vicinity of FBS is present or not" = "Yes"), the state management unit 13 is configured to manage the state of the femto radio base station FBS as a "non-notification state".

Moreover, when there is not a femto mobile station FUE that is being connected to a femto cell under the control of the femto radio base station FBS (when "whether FUE connected to FBS is present or not"= "No") and when there is not a macro mobile station MUE in the vicinity of the femto radio base station FBS (when "whether MUE in the vicinity of FBS is present or not" = "No"), the state management unit 13 is configured to manage the state of the femto radio base station FBS as a "non-notification state".

The scheduling information transmission unit 14 is configured to transmit, at a predetermined timing, to the femto radio base station FBS the scheduling information notifying a radio resource used for transmitting a predetermined signal assigned in the macro cell under the control of the macro radio base station MBS, a radio resource that can be used in the femto cell under the control of the femto radio base station FBS, or a radio resource that cannot be used in the femto cell under the control of the femto radio base station FBS.

For example, the scheduling information transmission unit 14 may be configured to transmit, at a predetermined timing, to the femto radio base station FBS the scheduling information notifying the radio resource used for transmitting a predetermined signal assigned in the macro cell under the control of the macro radio base station MBS, when the state of the femto radio base station FBS is managed by the state management unit 13 as a notification state.

Specifically, the scheduling information transmission unit 14 may be configured to specify the femto radio base station FBS that is a transmission target of the scheduling information, based on "ID (C-RNTI) of the macro mobile station MUE" or "ID (IP address, PCI, CID, CGI, etc.) of the femto radio base station FBS" included in the received measurement report.

In such a case, the scheduling information transmission unit 14 may be configured to transmit only assignment information of the radio resource assigned to a signal destined to the macro mobile station MUE in the macro cell, to the femto radio base station FBS that is a transmission target of the scheduling information.

On the other hand, the scheduling information transmission unit 14 may be configured not to transmit to the femto radio base station FBS the scheduling information notifying the radio resource used for transmitting a predetermined signal assigned in the macro cell under the control of the macro radio base station MBS, when the state of the femto radio base station FBS is managed by the state management unit 13 as a non-notification state.

It is noted that, in the scheduling information, the assignment information of the radio resource used for transmitting the downlink signal is included, as illustrated in Fig. 4. In a similar manner, in the scheduling information, the assignment information of the radio resource used for transmitting the uplink signal is included.

Further, in the scheduling information, assignment information of the radio resource in a time direction may be included, and assignment information of the radio resource in a frequency direction may be included.

The scheduling information transmission unit 14 may be configured to transmit the scheduling information at a constant cycle and may also be configured to transmit the scheduling information only when there occurs a change in a schedule content.

That is, the macro radio base station MBS determines that the current state is a state where the scheduling information needs to be transmitted to the femto radio base station FBS, i.e., that the femto radio base station FBS is in the "notification state", when it is determined that there is at least one macro mobile station MUE in the vicinity of the femto radio base station FBS.

On the other hand, the macro radio base station MBS determines that the current state is a state where the scheduling information does not need to be transmitted to the femto radio base station FBS, i.e., that the femto radio base station FBS is in the "non-notification state", when it is determined that there is not a single macro mobile station MUE in the vicinity of the femto radio base station FBS.

In this case, when the assignment of the radio resource is adjusted by the femto radio base station FBS, it is possible to inhibit the influence of the interference. This applies to when there is a femto mobile station FUE connecting to the femto radio base station FBS.

Therefore, when there is not a femto mobile station FUE connecting to the femto radio base station FBS, it is not necessary to transmit the scheduling information from the macro radio base station MBS to the femto radio base station FBS and signaling in a Backhaul line is wasted.

Thus, it is effective to control the state (the notification state or the non-notification state) of the femto radio base station FBS in the macro radio base station MBS by way of presence or absence of the femto mobile station FUE connecting to the femto radio base station FBS.

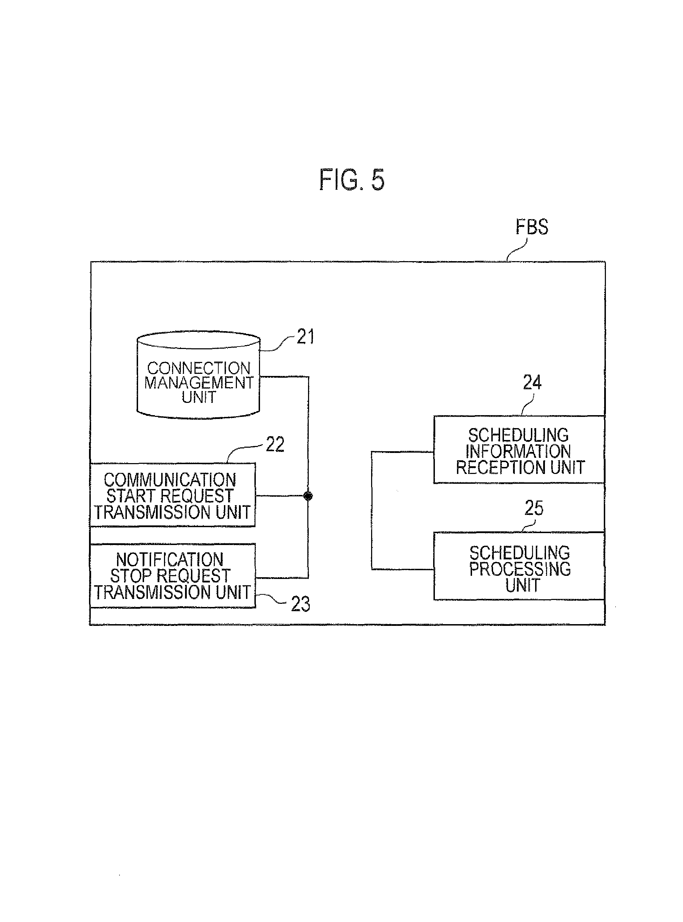

As illustrated in Fig. 5, the femto radio base station FBS includes a connection management unit 21, a notification start request transmission unit 22, a notification stop request transmission unit 23, a scheduling information reception unit 24, and a scheduling processing unit 25.

The connection management unit 21 is configured to manage an establishment situation of a communication connection in the femto cell (second cell) under the control of the femto radio base station FBS.

The notification start request transmission unit 22 is configured to transmit a notification start request to the macro radio base station MBS, when the femto radio base station FBS establishes at least one communication connection in the femto cell under the control of the femto radio base station FBS.

For example, the notification start request transmission unit 22 is configured to transmit the notification start request to the macro radio base station MBS, when the communication connection between the femto radio base station FBS and the femto mobile station FUE is established at the time of a call-in and call-out or a handover, etc.

It is noted that, when the femto mobile station FUE has newly established the communication connection in a state where there is already the femto mobile station FUE within the femto cell under the control of the femto radio base station FBS, the notification start request transmission unit 22 may be configured not to transmit the notification start request.

The notification stop request transmission unit 23 is configured to transmit a notification stop request to the macro radio base station MBS, when the femto radio base station FBS releases all the communication connections in the femto cell under the control of the femto radio base station FBS.

For example, at the time of the end of a call, squelch, a handover, etc., the notification stop request transmission unit 23 is configured to transmit the notification stop request to the macro radio base station MBS, when the communication connection is released between the femto radio base station FBS and the femto mobile station FUE.

However, if there is left a communication connection of another femto mobile station FUE, the notification stop request transmission unit 23 may be configured not to transmit the transmission of the notification stop request, even when the communication connection of a specific femto mobile station FUE is released in the femto cell under the control of the femoto radio station.

The scheduling information reception unit 24 is configured to receive scheduling information transmitted by the macro radio base station MBS.

The scheduling processing unit 25 is configured to assign the radio resource used for transmitting a predetermined signal in the femto cell under the control of the femto radio base station FBS.

In this case, the scheduling processing unit 25 is configured to determine the radio resource used for transmitting a predetermined signal, based on the radio resource notified by the scheduling information received by the scheduling information reception unit 24 in the femto cell under the control of the femto radio base station FBS.

For example, when the radio resource assigned to transmit the predetermined signal in the macro cell under the control of the macro radio base station MBS by the scheduling information received by the scheduling information reception unit 24 is notified, the scheduling processing unit 25 may be configured not to preferentially assign the radio resource used for transmitting the predetermined signal in the femto cell under the control of the femto radio base station FBS.

Further, when the radio resource that can be used in the femto cell under the control of the femto radio base station FBS is notified by the scheduling information received by the scheduling information reception unit 24, the scheduling processing unit 25 may be configured to preferentially assign the radio resource used for transmitting the predetermined signal in the femto cell under the control of the femto radio base station FBS.

Alternately, when the radio resource that cannot be used in the femto cell under the control of the femto radio base station FBS is notified by the scheduling information received by the scheduling information reception unit 24, the scheduling processing unit 25 may be configured not to assign the radio resource used for transmitting the predetermined signal in the femto cell under the control of the femto radio base station FBS.

Moreover, the scheduling processing unit 25 may be configured to assign the radio resource notified by the scheduling information received by the scheduling information reception unit 24, as the radio resource used for transmitting a predetermined signal, in the femto cell under the control of the femto radio base station FBS, but to decrease the use priority of the radio resource.

It is noted that one portion of or all of the functions in Fig. 5 may be provided in the gateway apparatus HGW not in the femto radio base station FBS.

### (Operation of the mobile communication system according to the first embodiment of the present invention)

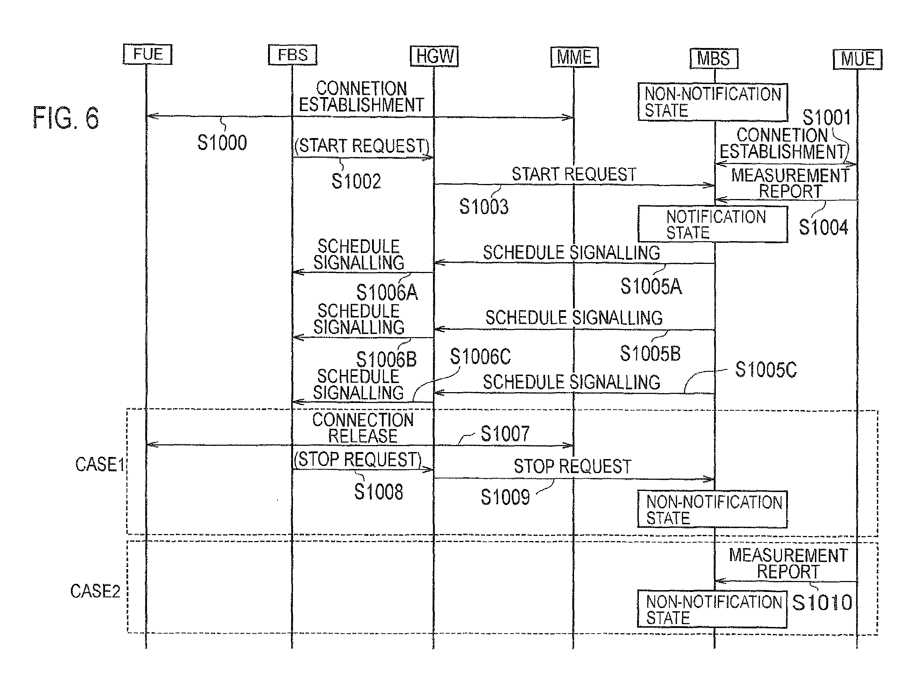

With reference to Fig. 6, the operation of the mobile communication system according to the first embodiment of the present invention will be explained.

As illustrated in Fig. 6, the communication connection is established between the femto mobile station FUE and the switching center MME via the femto radio base station FBS and the gateway apparatus HGW disposed therebetween (step S1000). In step S1001, the communication connection is established between the macro mobile station MUE and the macro radio base station MBS (step S1001) . At this time point, in the macro radio base station MBS, the state of the femto radio base station FBS is the "non-notification state".

In step S1002, the femto radio base station FBS transmits the notification start request to the gateway apparatus HGW, in response to the establishment of the communication connection between the femto mobile station FUE and the switching center MME, and in step S1003, the gateway apparatus HGW transmits the notification start request to the macro radio base station MBS. It is noted that step S1002 may be omitted.

In this case, the macro radio base station MBS may set the state of the femto radio base station FBS to the "notification state" in response to the reception of the notification start request.

Further, when, in step S1004, after receiving the notification start request, a measurement report indicating that the downlink radio quality in the femto cell under the control of the femto radio base station FBS is equal to or more than a predetermined threshold value is received from the macro mobile station MUE that is in communication within the macro cell under the control of the macro radio base station MBS, the macro radio base station MBS may set the state of the femto radio base station FBS to the "notification state".

Subsequently, when the scheduling content is changed or at a constant cycle, the macro radio base station MBS transmits to the femto radio base station FBS the scheduling information that notifies the radio resource used for transmitting a predetermined signal (the above-described signal destined to the macro mobile station, for example) assigned in the macro radio base station MBS via the gateway apparatus HGW (steps Sl005A, S1006A, S1005B, S1006B, S1005C, and S1006C, for example).

In receipt of the scheduling information, the femto radio base station FBS averts the radio resource notified by the scheduling information, and performs a scheduling process on the femto mobile station FUE in the femto cell under the control of the femto radio base station FBS.

In this case, the femto radio base station FBS may completely avert the radio resource notified by the scheduling information, and decrease the use priority of the radio resource notified by the scheduling information.

Further, in the radio resource notified by the scheduling information, the femto radio base station FBS may lower the transmission power and transmit a small amount of data.

When the communication connection between the femto mobile station FUE and the switching center MME is released in step S1007, the femto radio base station FBS transmits the notification stop request to the gateway apparatus HGW in step S1008, and the gateway apparatus HGW transmits the notification stop request to the macro radio base station MBS in step S1009. It is noted that step S1008 may be omitted.

In this case, the macro radio base station MBS sets the state of the femto radio base station FBS to the "non-notification state" in response to receipt of the notification stop request.

Further, even when the notification stop request has not been received, the macro radio base station MBS sets the state of the femto radio base station FBS to the "non-notification state" if a measurement report indicating that the downlink radio quality in the femto cell under the control of the femto radio base station FBS is not equal to or more than a predetermined threshold value is received from the macro mobile station MUE that is in communication in the macro cell under the control of the macro radio base station MBS in step S1010.

In the above-described embodiment, an example in which the signaling between the femto radio base station FBS or the gateway apparatus HGW and the macro radio base station MBS is performed by way of the switching center MME using the S1 interface is described; however, if an X2 interface is further set between the gateway apparatus HGW and the macro radio base station MBS or between the femto radio base station FBS and the macro radio base station MBS, for example, then a similar signaling can be performed by using the X2 interface.

Moreover, the gateway apparatus HGW may include a function of appropriately routing the scheduling notification from the macro radio base station MBS to the subordinate femto radio base station FBS.

Further, a process of setting the X2 interface may be performed between the gateway apparatus HGW and the macro radio base station MBS or between the femto radio base station FBS and the macro radio base station MBS, at the same time that the femto radio base station FBS or the gateway apparatus HGW transmits the notification start request to the macro radio base station MBS.

### (Operation and effect of the mobile communication system according to the first embodiment of the present invention)

Based on the mobile communication system according to the first embodiment of the present invention, the macro radio base station MBS can notify the femto radio base station FBS of the scheduling information, and thus, it is possible to effectively decrease the interference in the femto radio base station FBS.

The above-mentioned aspect of the embodiment may be expressed as follows:

A first aspect of the present embodiment is summarized as a mobile communication method including a step of : (A) transmitting, from a macro radio base station MBS (first radio base station) to a femto radio base station FBS (second radio base station), scheduling information notifying, at a predetermined timing, of a radio resource assigned to transmit a predetermined signal in a macro cell (first cell) under the control of a macro radio base station MBS, a radio resource that can be used in a femto cell (second cell) under the control of a femto radio base station FBS, or a radio resource that cannot be used in the femto cell under the control of the femto radio base station FBS.

The first aspect of the present embodiment further may include a step of: (B) transmitting, from the femto radio base station FBS to the macro radio base station MBS, a notification start request, and in the step (A), the macro radio base station MBS may start transmitting the scheduling information to the femto radio base station FBS in response to the notification start request.

In the first aspect of the present embodiment, in the step (B), the femto radio base station FBS may transmit the notification start request to the macro radio base station MBS when a communication connection is established with at least one mobile station FUE in a femto cell under the control of the femto radio base station FBS.

The first aspect of the present embodiment further may include a step of: (C) transmitting, from the femto radio base station FBS to the macro radio base station MBS, the notification stop request, and in the step (A), the macro radio base station MBS may stop transmitting the scheduling information to the femto radio base station FBS in response to a notification stop request.

In the first aspect of the present embodiment, in the step (C), the femto radio base station FBS may transmit the notification stop request to the macro radio base station MBS, when a communication connection with all the mobile station FUE is released in the femto cell under the control of the femto radio base station FBS.

In the first aspect of the present embodiment, in the step (A), the macro radio base station MBS may transmit the scheduling information to the femto radio base station FBS at a predetermined timing, when the macro radio base station MBS manages a state of the femto radio base station FBS as a notification state.

The first aspect of the present embodiment further may include a step of: (D) assigning, at the femto radio base station FBS, a radio resource used for transmitting a predetermined signal in the femto cell under the control of the femto radio base station FBS.

In the first aspect of the present embodiment, in the step (D), the femto radio base station FBS may determine a radio resource used for transmitting a predetermined signal in the femto cell, based on the radio resource notified by the scheduling information.

The first aspect of the present embodiment further may include a step of: (E) managing, at the macro radio base station MBS, the state of the femto radio base station FBS as a notification state, when the presence of the mobile station FUE that is in communication in the femto cell is detected.

The first aspect of the present embodiment further may include a step of: (E) managing, at the macro radio base station MBS, the state of the femto radio base station FBS as a notification state, when a measurement report indicating that a downlink radio quality in the femto cell is equal to or more than a predetermined threshold value is received from the mobile station MUE that is in communication in the macro cell.

In the first aspect of the present embodiment, in the step (E), the macro radio base station MBS may detect the presence of the mobile station UE that is in communication in the femto cell, in response to the notification start request received from the femto radio base station FBS.

The first aspect of the present embodiment further may include a step of: (F) managing, at the macro radio base station MBS, the state of the femto radio base station FBS as a non-notification state, in response to the notification stop request received from the femto radio base station FBS.

The first aspect of the present embodiment further may include a step of: (G) transmitting, from the gateway apparatus HGW that collectively controls the femto radio base stations FBS to the macro radio base station MBS, a notification start request, when it is detected that a communication connection with at least one mobile station FUE in the femto cell is established, and in the step (E), the macro radio base station MBS may detect the presence of the mobile station FUE that is in communication in the femto cell, in response to the notification start request.

The first aspect of the present embodiment further may include steps of: (H) transmitting, from the gateway apparatus HGW that collectively controls the femto radio base stations FBS to the macro radio base station MBS, a notification stop request, when it is detected that a communication connection with all the mobile station FUE is released in the femto cell; and (I) managing, at the macro radio base station MBS, a state of the femto radio base station FBS as a non-notification state in response to the

### notification stop request.

The first aspect of the present embodiment further may include a step of: (J) managing, at the macro radio base station MBS, the state of the femto radio base station FBS as a non-notification state, when a measurement report indicating that a downlink radio quality in the femto cell is not equal to or more than a predetermined threshold value is received from the mobile station MUE that is in communication in the macro cell.

A second aspect of the present embodiment is summarized as a macro radio base station MBS connected to a femto radio base station FBS, including a scheduling information transmission unit 14 configured to transmit to the femto radio base station FBS scheduling information, at a predetermined timing, notifying a radio resource used for transmitting a predetermined signal assigned in a macro cell under the control of the macro radio base station MBS, a radio resource that can be used in the femto cell under the control of the femto radio base station FBS, or a radio resource that cannot be used in the femto cell under the control of the femto radio base station FBS.

In the second aspect of the present embodiment, the scheduling information transmission unit 14 may be configured to start transmitting the scheduling information to the femto radio base station FBS, in response to a notification start request received from the femto radio base station FBS.

In the second aspect of the present embodiment, the scheduling information transmission unit 14 may be configured to stop transmitting the scheduling information to the femto radio base station FBS, in response to a notification stop request received from the femto radio base station FBS.

In the second aspect of the present embodiment, it may be configured such that there is further provided a state management unit 13 configured to manage whether a state of the femto radio base station FBS is a notification state or a non-notification state, and the scheduling information transmission unit 14 transmits the scheduling information to the femto radio base station FBS at a predetermined timing, when the state of the femto radio base station FBS is managed by the state management unit 13 as the notification state.

In the second aspect of the present embodiment, the state management unit 13 may be configured to manage the state of the femto radio base station FBS as the notification state, when the presence of the mobile station FUE that is in communication in the femto cell under the control of the femto radio base station FBS is detected.

In the second aspect of the present embodiment, the state management unit 13 may be configured to manage the state of the femto radio base station FBS as the notification state, when a measurement report indicating that a downlink radio quality in the femto cell is equal to or more than a predetermined threshold value is received from the mobile station MUE that is in communication in the macro cell.

In the second aspect of the present embodiment, the state management unit 13 may be configured to detect the presence of the mobile station FUE that is in communication in the femto cell, in response to a notification start request received from the femto radio base station FBS.

In the second aspect of the present embodiment, the state management unit 13 may be configured to manage the state of the femto radio base station FBS as a non-notification state, in response to a notification stop request received from the femto radio base station FBS.

In the second aspect of the present embodiment, the state management unit 13 may be configured to detect the presence of the mobile station FUE that is in communication in the femto cell, in response to a notification start request received from the gateway apparatus HGW that collectively controls the femto radio base stations FBS.

In the second aspect of the present embodiment, the state management unit 13 may be configured to manage the state of the femto radio base station FBS as a non-notification state, in response to a notification stop request received from the gateway apparatus HGW that collectively controls the femto radio base stations FBS.

In the second aspect of the present embodiment, the state management unit 13 may be configured to manage the state of the femto radio base station FBS as the non-notification state, when a measurement report indicating that a downlink radio quality in the femto cell is not equal to or more than a predetermined threshold value is received from the mobile station MUE that is in communication in the macro cell.

A third aspect of the present embodiment is simmerized as a femto radio base station FBS connected to a macro radio base station MBS, including: a notification start request transmission unit 22 configured to transmit a notification start request to the macro radio base station MBS; a scheduling information reception unit 24 configured to receive scheduling information, when the macro radio base station MBS transmits the scheduling information notifying a radio resource used for transmitting a predetermined signal assigned in a macro cell under the control of the macro radio base station MBS in response to the notification start request, a radio resource that can be used in the femto cell under the control of the femto radio base station FBS, or a radio resource that cannot be used in the femto cell under the control of the femto radio base station FBS; and a scheduling processing unit 25 configured to assign the radio resource used for transmitting the predetermined signal in the femto cell under the control of the femto radio base station FBS, based on the received scheduling information.

The operation of the above-described macro radio base station MBS, the femto radio base station FBS, the macro mobile station MUE and the femto mobile station FUE may be implemented by a hardware, may also be implemented by a software module executed by a processor, and may further be implemented by the combination of the both.

The software module may be arranged in a storing medium of an arbitrary format such as RAM(Random Access Memory), a flash memory, ROM (Read Only Memory), EPROM(Erasable Programmable ROM), EEPROM (Electronically Erasable and Programmable ROM), a register, a hard disk, a removable disk, and CD-ROM.

Such a storing medium is connected to the processor so that the processor can write and read information into and from the storing medium. Such a storing medium may also be accumulated in the processor. Such a storing medium and processor may be arranged in ASIC. Such ASIC may be arranged in the macro radio base station MBS, the femto radio base station FBS, the macro mobile station MUE and the femto mobile station FUE. As a discrete component, such a storing medium and processor may be arranged in the macro radio base station MBS, the femto radio base station FBS, the macro mobile station MUE and the femto mobile station FUE.

Thus, the present invention has been explained in detail by using the above-described embodiments; however, it is obvious that for persons skilled in the art, the present invention is not limited to the embodiments explained herein. The present invention can be implemented as a corrected, modified mode without departing from the gist and the scope of the present invention defined by the claims. Therefore, the description of the specification is intended for explaining the example only and does not impose any limited meaning to the present invention.

## Claims

1. A mobile communication method, comprising a step of:
(A) transmitting, from a first radio base station to a second radio base station, scheduling information notifying a radio resource assigned for transmitting a predetermined signal in a first cell under the control of the first radio base station, a radio resource that can be used in a second cell under the control of the second radio base station, or a radio resource that cannot be used in the second cell under the control of the second radio base station.

2. The mobile communication method according to claim 1, further comprising a step of:
(B) transmitting, from the second radio base station to the first radio base station, a notification start request; wherein
in the step (A), the first radio base station starts transmitting the scheduling information to the second radio base station in response to the notification start request.

3. The mobile communication method according to claim 2, wherein
in the step (B), the second radio base station transmits the notification start request to the first radio base station, when a communication connection with at least one mobile station is established in the second cell under the control of the second radio base station.

4. The mobile communication method according to claim 1, further comprising a step of:
(C) transmitting, from the second radio base station to the first radio base station, a notification stop request; wherein
in the step (A), the first radio base station stops transmitting the scheduling information to the second radio base station in response to the notification stop request.

5. The mobile communication method according to claim 4, wherein
in the step (C), the second radio base station transmits the notification stop request to the first radio base station, when the communication connection with all the mobile stations is released in the second cell under the control of the second radio base station.

6. The mobile communication method according to claim 1, wherein
in the step (A), the first radio base station transmits the scheduling information to the second radio base station, when a state of the second radio base station is managed as a notification state.

7. The mobile communication method according to claim 1, further comprising a step of:
(D) assigning, at the second radio base station, the radio resource used for transmitting the predetermined signal in the second cell under the control of the second radio base station.

8. The mobile communication method according to claim 7, wherein
in the step (D), the second radio base station determines, in the second cell, the radio resource used for transmitting the predetermined signal based on the radio resource notified by the scheduling information.

9. The mobile communication method according to claim 6, further comprising a step of:
(E) managing, at the first radio base station, a state of the second radio base station as the notification state, when the presence of the mobile station that is in communication in the second cell is detected.

10. The mobile communication method according to claim 6 or 9, further comprising a step of:
(E) managing, at the first radio base station, the state of the second radio base station as the notification state, when a measurement report indicating that a downlink radio quality in the second cell is equal to or more than a predetermined threshold value is received from a mobile station that is in communication in the first cell.

11. The mobile communication method according to claim 9, wherein
in the step (E), the first radio base station detects the presence of the mobile station that is in communication in the second cell, in response to the notification start request received from the second radio base station.

12. The mobile communication method according to claim 6, further comprising a step of:
(F) managing, at the first radio base station, the state of the second radio base station as a non-notification state, in response to the notification stop request received from the second radio base station.

13. The mobile communication method according to claim 9, further comprising a step of:
(G) transmitting, to the first radio base station, a notification start request, when a gateway apparatus that collectively controls the second radio base stations detects that a communication connection with at least one mobile station is established in the second cell, wherein
in the step (E), the first radio base station detects the presence of the mobile station that is in communication in the second cell, in response to the notification start request.

14. The mobile communication method according to claim 9 or 10, further comprising the steps of:
(H) transmitting, from the gateway apparatus that collectively controls second radio base stations to the first radio base station, a notification stop request, upon detection that the communication connection with all the mobile stations is released in the second cell; and
(I) managing, at the first radio base station, the state of the second radio base station as a non-notification state, in response to the notification stop request.

15. The mobile communication method according to claim 9 or 10, further comprising a step of:
(J) managing, at the first radio base station, the state of the second radio base station as a non-notification state, upon receipt of a measurement report indicating that the downlink radio quality in the second cell is not equal to or more than a predetermined threshold value is received from a mobile station that is in communication in the first cell.

16. A radio base station connected to a second radio base station, comprising:
a scheduling information transmission unit configured to transmit, to the second radio base station, scheduling information notifying a radio resource used for transmitting a predetermined signal assigned in a first cell under the control of the radio base station, a radio resource that can be used in a second cell under the control of the second radio base station, or a radio resource that cannot be used in the second cell under the control of the second radio base station.

17. The radio base station according to claim 16, wherein the scheduling information transmission unit is configured to start transmitting the scheduling information to the second radio base station, in response to a notification start request received from the second radio base station.

18. The radio base station according to claim 16, wherein the scheduling information transmission unit is configured to stop transmitting the scheduling information to the second radio base station, in response to a notification stop request received from the second radio base station.

19. The radio base station according to claim 16, further comprising:
a state management unit configured to manage whether a state of the second radio base station is a notification state or a non-notification state, wherein
the scheduling information transmission unit is configured to transmit the scheduling information to the second radio base station, when it is managed by the state management unit that the state of the second radio base station is the notification state.

20. The radio base station according to claim 19, wherein the state management unit is configured to manage the state of the second radio base station as the notification state, when the presence of the mobile station that is in communication in the second cell under the control of the second radio base station is detected.

21. The radio base station according to claim 19 or 20, wherein the state management unit is configured to manage the state of the second radio base station as the notification state, when a measurement report indicating that the downlink radio quality in the second cell is equal to or more than a predetermined threshold value is received from a mobile station that is in communication in the first cell.

22. The radio base station according to claim 20, wherein the state management unit is configured to detect the presence of the mobile station that is in communication in the second cell, in response to a notification start request received from the second radio base station.

23. The radio base station according to claim 19, wherein the state management unit is configured to manage the state of the second radio base station as the non-notification state, in response to a notification stop request received from the second radio base station.

24. The radio base station according to claim 20, wherein the state management unit is configured to detect the presence of the mobile station that is in communication in the second cell, in response to a notification start request received from a gateway apparatus that collectively controls the second radio base stations.

25. The radio base station according to claim 20, wherein the state management unit is configured to manage the state of the second radio base station as the non-notification state, in response to a notification stop request received from the gateway apparatus that collectively controls the second radio base stations.

26. The radio base station according to claim 19, wherein the state management unit is configured to manage the state of the second radio base station as the non-notification state, when a measurement report indicating that the downlink radio quality in the second cell is not equal to or more than a predetermined threshold value is received from the mobile station that is in communication in the first cell.

27. A radio base station connected to a first radio base station, comprising:
a notification start request transmission unit configured to transmit a notification start request to the first radio base station;
a scheduling information reception unit configured to receive scheduling information, when the first radio base station transmits the scheduling information notifying a radio resource used for transmitting a predetermined signal assigned in a first cell under the control of the first radio base station in response to the notification start request, a radio resource that can be used in the second cell under the control of the second radio base station, or a radio resource that cannot be used in the second cell under the control of the second radio base station; and
a scheduling processing unit configured to assign the radio resource used for transmitting a predetermined signal in the second cell under the control of the radio base station, based on the received scheduling information.
